Europäisches Patentamt

European Patent Office

Office européen des brevets

(19)

(11) Veröffentlichungsnummer: **0 348 801**
**A1**

(12) ## EUROPÄISCHE PATENTANMELDUNG

(21) Anmeldenummer: **89111242.7**

(22) Anmeldetag: **20.06.89**

(51) Int. Cl.⁴: **A47C 3/30 , F16F 9/08**

(30) Priorität: **01.07.88 DE 3822384**

(43) Veröffentlichungstag der Anmeldung:
**03.01.90 Patentblatt 90/01**

(84) Benannte Vertragsstaaten:
**AT BE CH DE ES FR GB GR IT LI LU NL SE**

(71) Anmelder: **Otto, Günter**
**Iltisstrasse 90b**
**D-4432 Gronau(DE)**

Anmelder: **Lübbering, Johannes**
**Clarholzer Strasse 39**
**D-4836 Herzebrock-Clarholz(DE)**

Anmelder: **Reckendrees, Christian**
**Weisses Venn 14**
**D-4836 Herzebrock-Clarholz(DE)**

(72) Erfinder: **Otto, Günter**
**Iltisstrasse 90b**
**D-4432 Gronau(DE)**
Erfinder: **Otto, Christian**
**Iltisstrasse 90b**
**D-4432 Gronau(DE)**
Erfinder: **Lübbering, Johannes**
**Clarholzer Strasse 39**
**D-4836 Herzebrock-Clarholz(DE)**
Erfinder: **Reckendrees, Christian**
**Weisses Venn 14**
**D-4836 Herzebrock-Clarholz(DE)**

(74) Vertreter: **Henkel, Feiler, Hänzel & Partner**
**Möhlstrasse 37**
**D-8000 München 80(DE)**

(54) **Technische Feder.**

(57) Die technische Feder besteht aus einem Außenzylinder (1), einem Innenzylinder (8) und einem koaxial zwischen beiden angeordneten und an den Enden mit beiden dicht verbundenen elastischen Schlauch (13), wodurch ein Zylinderraum (16), ein Flüssigkeitsringraum (15) und ein Gasringraum (7) definiert werden. Zwischen dem Zylinderraum (16) und dem Flüssigkeitsraum (15) ist mindestens ein Überströmkanal (19) vorgesehen. Bei Betätigung einer in dem Zylinderraum verschiebbar angeordneten Kolbenstange (17) wird Flüssigkeit in den Flüssigkeitsringraum (15) verdrängt, wodurch der elastische Schlauch (13) entgegen dem Gasdruck in dem Gasringraum (7) ausgedehnt wird. Die Federkennung wird dabei durch den Schlauch und den Gasdruck festgelegt. Durch Gestaltung des einen oder mehrerer Überströmkanäle kann die Geschwindigkeit der Kolbenstangenbewegung in Druck- und/oder Zugrichtung mehr oder weniger gebremst werden.

Die technische Feder ist für verschiedene Einsatzgebiete anwendbar, beispielsweise zum Verstellen von Sitzen oder zum Verschließen von Türen.

EP 0 348 801 A1

Fig. 1

## Technische Feder

Die Erfindung betrifft eine technische Feder mit einem einen Gasringraum umschließenden, mit Bodenstücken abgedichteten Außenzylinder, einem koaxial in dem Außenzylinder angeordneten, an den Enden abgedichteten Innenzylinder, einer in dem Innenzylinder verschiebbar angeordneten, durch ein Bodenstück dicht nach außen geführten Kolbenstange und mindestens einem Überströmkanal für ein den Zylinderraum innerhalb des Innenzylinders füllendes Fluidum.

Eine derartige technische Feder liegt bereits bei einer in der DE-OS 35 22 722 beschriebenen Hubvorrichtung vor. Dort ist mit der Kolbenstange im Innenzylinder ein Kolben verbunden, der zwei Gehäuseräume voneinander trennt, welche ihrerseits über Überströmkanäle zu einem zwischen Innenzylinder und Außenzylinder gebildeten Gasringraum in Verbindung gebracht werden können. Einer der Überströmkanäle ist als Ventil ausgebildet, das abgesperrt werden kann und dadurch eine Arretierung der Kolbenstange in beliebiger Stellung ermöglicht. Durch Füllung der beiden Gehäuseräume mit Druckluft ist eine Federwirkung erzielbar, doch ergeben sich bei Verwendung von Druckgas als einzigem Strömungsmedium nur geringe Variationsmöglichkeiten. Insbesondere ist eine Einstellung der Betätigungsgeschwindigkeit nur begrenzt möglich.

Aufgabe der Erfindung ist es, eine technische Feder der eingangs genannten Art zu schaffen, die eine große Variationsmöglichkeit in der Anwendung, insbesondere verschiedene Möglichkeiten der Abbremsung für die Kolbenstange und damit verschiedene Einstellmöglichkeiten für die Betätigungsgeschwindigkeit, aber auch Einstellmöglichkeiten für die Federkraft bietet. Diese technische Feder soll durch einfache Abwandlungen wahlweise in der einen oder in der anderen Richtung blockierbar sein.

Erfindungsgemäß wird diese Aufgabe mit einer Feder der eingangs genannten Art dadurch gelöst, daß der Zylinderraum im Innenzylinder mit einer Flüssigkeit gefüllt ist, daß der Innenzylinder koaxial von einem an den Enden dicht mit ihm verbundenen, elastischen Schlauch umgeben ist, der einen veränderlichen Flüssigkeitsringraum begrenzt, daß der zwischen dem Schlauch und dem Außenzylinder verbleibende Ringraum als Gasringraum mit einem Druckgas gefüllt ist und daß der Überströmkanal bzw. die Überströmkanäle den Zylinderraum mit dem Flüssigkeitsringraum verbinden.

Durch den erfindungsgemäß vorgesehenen elastischen Schlauch wird ein flüssiges Strömungsmedium von einem gasförmigen Medium getrennt, wobei die Federkraft nicht nur durch die Wahl des Druckgases, sondern auch durch das Material des Schlauches beeinflußt werden kann. Das als Strömungsmedium in dem Zylinderraum und in dem Flüssigkeitsringraum vorgesehene flüssige Medium eröffnet viele Möglichkeiten der Abbremsung und damit der Geschwindigkeitsbeeinflussung im Zylinderraum und in den Überströmkanälen zwischen Zylinderraum und Flüssigkeitsringraum. In dem Flüssigkeitsringraum zwischen dem Schlauch und dem Innenzylinder wird dabei ein Flüssigkeitsvolumen vorgesehen, welches den Schlauch gegenüber dem Innenzylinder ständig auf Distanz hält und eine ausreichend hohe Lebensdauer gewährleistet. Dieses Volumen ist als Reserve für unvermeidbare Dichtigkeitsverluste bezüglich der Abdichtung an den Zylinderenden anzusehen. Selbstverständlich muß der Schlauch aus einem Material bestehen, das gegenüber der verwendeten Flüssigkeit, etwa Öl, beständig ist.

In einer vorteilhaften Ausführungsform der Erfindung ist zwischen dem Zylinderraum und dem Flüssigkeitsringraum ein erster, in beiden Richtungen durchgängiger Überströmkanal und ein zweiter, durch ein Rückschlagventil in einer Richtung durchgängiger Überströmkanal vorgesehen. Der erste Überströmkanal ist vorzugsweise als radiale Düse in der Nähe eines Endstückes in der Wand des Innenzylinders angebracht, während der zweite Überströmkanal als Rückschlagventil in dem entgegengesetzten Endstück des Innenzylinders vorgesehen sein kann. Das Rückschlagventil ermöglicht bei einer Bewegung der Kolbenstange in einer Richtung eine Strömung zusätzlich zu der Strömung durch den ersten Überströmkanal, wodurch eine schnellere Bewegung ermöglicht wird, während in der entgegengesetzten Richtung das Überschlagventil schließt, so daß die Flüssigkeit nur durch die Düse strömen kann, womit eine Bremswirkung erzielt wird. Je nach Richtung des Rückschlagventils wird also die Bremswirkung in Druckrichtung oder in Zugrichtung der Kolbenstange erzielt.

In der einfachsten Ausführungsform weist die Kolbenstange bis zu ihrem Ende einen großen Spalt gegenüber der Wand des Innenzylinders auf; sie besitzt also keinen Kolben, so daß die Flüssigkeit innerhalb des Zylinderraums frei an der Kolbenstange entlang strömen kann. In einer anderen Ausgestaltung weist jedoch die Kolbenstange einen an der Wand des Innenzylinders dichtend anliegenden Kolben auf, der den Zylinderraum in einen ersten, von der Kolbenstange durchsetzten Raumabschnitt und in einen zweiten, vom freien Ende des Kolbens begrenzten Raumabschnitt unterteilt, wobei jeder der beiden Räume einen Überströmkanal zum Flüssigkeitsringraum aufweist. Der Kolben selbst kann unterschiedlich gestaltet sein. Beispielsweise kann in dem Kolben ein Verbindungskanal mit geringem Querschnitt vorgesehen sein, der die beiden Raumabschnitte des Zylinderraums untereinander verbindet. Der Querschnitt des Verbindungskanals legt dabei die gewünschte Bremswirkung für den Kolben und die Kolbenstange fest. Der Verbindungskanal kann dabei auch einseitig oder zweiseitig jeweils mit Dichtlippen verschlossen sein, welche den Durchgang erst bei einem vorgegebenen Druck freigeben. Damit wird die Kolbenstange in der jeweils erreichten Position arretiert, kann jedoch bei Ausübung eines bestimmten Drucks weiter bewegt werden.

Der Kolben kann die beiden Raumabschnitte des Zylinderraums auch ohne Durchlaß dicht gegeneinander abschließen, wobei der zweite Raumabschnitt als Überströmkanal ein von außen wahlweise verschließbares Ventil aufweist. Auf diese Weise kann durch Verschließen des Ventils, etwa mit einem in Axialrichtung eindrückbaren Ventilstift, in jeder gewünschten Position arretiert werden. Durch entsprechende Gestaltung des Ventils kann die Arretierung entweder nur in Druck-oder in Zugrichtung oder auch in beiden Richtungen wirken.

Die Erfindung wird nachfolgend an Ausführungsbeispielen anhand der Zeichnung näher erläutert. Es zeigt:

Fig. 1 eine erfindungsgemäß gestaltete technische Feder in einer ersten Ausführungsform,

Fig. 2 und 3 zwei gegenüber Fig. 1 abgewandelte Ausführungsformen der Kolbenstange mit unterschiedlichen Kolben,

Fig. 4 eine gegenüber Fig. 1 abgewandelte Ausgestaltung des oberen Bodenstücks mit einem von außen verstellbaren Ventil, und

Fig. 5 eine gegenüber Fig. 1 abgewandelte Ausführung der technischen Feder mit einer Ventilanordnung zur Arretierung der Feder sowohl in Druck- als auch in Zugrichtung.

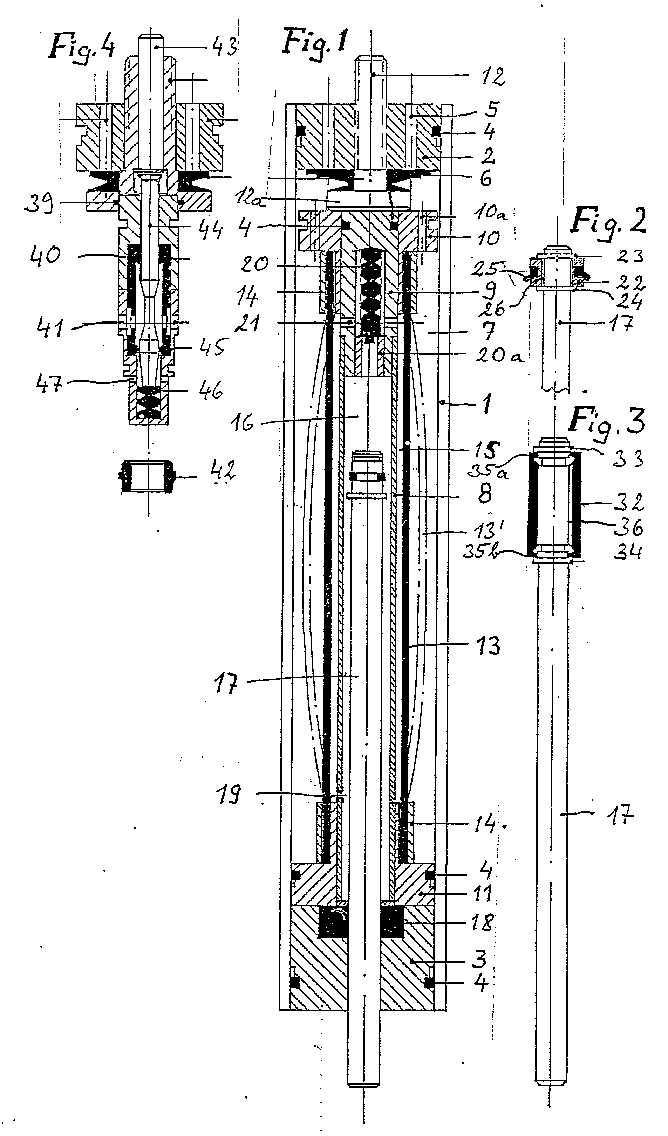

Die in Fig. 1 dargestellte technische Feder besitzt einen Außenzylinder 1, der mit einem oberen Bodenstück 2 und einem unteren Bodenstück 3 unter Verwendung von Dichtringen 4 jeweils dicht abgeschlossen ist. In dem oberen Bodenstück 2 sind Bohrungen 5 vorgesehen, die in Verbindung mit einem Rückschlagventil 6 das Einfüllen von Druckgas in den Gasringraum 7 innerhalb des Außenzylinders 1 ermöglichen.

Koaxial in dem Außenzylinder 1 ist ein Innenzylinder 8 angeordnet, der mit einem oberen Endstück 9 und einem Flansch 10 sowie mit einem unteren Flansch 11 in dem Außenzylinder 1 positioniert ist. Soweit notwendig, sind auch hier Dichtringe 4 verwendet. Die gesamte Einheit des Innenzylinders mit Endstücken liegt über einen Schraubenkopf 12a einer Befestigungsschraube 12 und das Rückschlagventil 6 an dem oberen Bodenstück 2 an. In dem oberen Flansch 10 sind Durchgangsbohrungen für das Druckgas vorgesehen.

Der Innenzylinder 8 wird von einem aus flexiblem Material bestehenden Schlauch 13 umgeben, der koaxial zu ihm in dem Außenzylinder angeordnet ist und mittels Schlauchschellen 14 an den jeweiligen Flanschen des Innenzylinders befestigt ist. Zwischen Innenzylinder 8 und Schlauch 13 wird ein Flüssigkeitsringraum 15 festgelegt, der je nach dem Druck der Flüssigkeit durch Ausweiten des Schlauches 13 entgegen dem Gasdruck in dem Gasringraum 7 vergrößert werden kann. Der Flüssigkeitsringraum 15 muß jedoch immer ein bestimmtes Flüssigkeitsvolumen aufweisen, damit der Schlauch 13 und der Innenzylinder 8 auf Distanz gehalten werden und so eine ausreichend hohe Lebensdauer der Feder gewährleisten. Dieses Volumen dient als Reserve für eventuell auftretende Flüssigkeitsverluste im System im Laufe der Lebensdauer.

Innerhalb des Innenzylinders 8 ist ein Zylinderraum 16 festgelegt, in welchem eine Kolbenstange 17 in Axialrichtung verschiebbar angeordnet ist. Diese Kolbenstange 17 ist in dem unteren Bodenstück 3 über eine dichte Durchführung 18 gelagert. Sie besitzt in diesem Fall keinen Kolben, sondern verdrängt allein durch ihr Stangenvolumen je nach Stellung mehr oder weniger Flüssigkeit in dem Zylinderraum 16. Dieser Zylinderraum 16 besitzt im Bereich des unteren Flansches 11 eine als Bohrung im Innenzylinder 8 ausgeführte Düse 19 als Verbindung zum Flüssigkeitsringraum 15, die einen ersten Überströmkanal darstellt. Außerdem ist in dem oberen Endstück 9 ein Rückschlagventil 20 mit einem Ventilgehäuse 20a vorgesehen, welches bei Druckbeaufschlagung, also beim Einschieben der Kolbenstange 17, eine weitere Querbohrung 21 zum Flüssigkeitsringraum 15 freigibt. Das bedeutet, daß beim Einschieben der Kolbenstange 17 eine schnelle Bewegung möglich ist, da die Flüssigkeit über die beiden Öffnungen 19 und 21 in den Flüssigkeitsringraum ausweichen und dort den Schlauch 13 ausdehnen kann, während beim Ausziehen der Kolbenstange 17 die Öffnung 21 verschlossen ist, also die Flüssigkeit lediglich über die Düse 19 zurückströmen kann. Dadurch ergibt sich beim Ausziehen eine gewünschte Bremswirkung.

Beim Einschieben des Kolbens unter Druck wird also der Schlauch 13 nach außen gespannt und nimmt die Form 13' an, wodurch das Druckgas in dem Gasringraum 7 höher verdichtet wird. Damit wird die Kennung der technischen Feder festgelegt, wobei die Elastizität des Schlauches in diese Kennung mit eingeht. Die Ausfahrgeschwindigkeit dagegen wird durch den Querschnitt der Düse 19 bestimmt.

Die Kolbenstange kann aber auch mit einem Kolben 22 gemäß Fig. 2 versehen werden. Dieser Kolben 22 besitzt ein bestimmtes Führungsspiel und ist zwischen den Wellensicherungen 23 und 24 auf die Kolbenstange 17 aufgebracht. Er besitzt außerdem eine Abdichtung 25, womit er dicht an der Wand des Innenzylinders 8 anliegt. Im Inneren besitzt der Kolben jedoch einen Durchgangsspalt 26, der einen Durchtritt der Flüssigkeit im Zylinderraum von der einen Seite des Kolbens zur anderen ermöglicht. Mit der Größe des gewählten Spaltes wird die Geschwindigkeit der Kolbenstange 17 in beiden Richtungen reguliert. In diesem Fall kann das Rückschlagventil 20 ebenso wie die Bohrung 19 entfallen, wobei jedoch die Öffnung 21 erhalten bleiben muß. Die Dichtlippe 25 des Kolbens 22 ist so ausgebildet, daß sie je nach Anordnung das flüssige Medium in entsprechender Richtung vorbeiströmen läßt. In entgegengesetzter Richtung kann die Flüssigkeit lediglich durch den Spalt 26 treten, wodurch die gewünschte Bremswirkung erzielt wird.

Ersetzt man den Kolben 22 von Fig. 2 durch den Kolben 32 in Fig. 3, so kann ein Kolbenstangenstillstand in jeder beliebigen Position erreicht werden. Der Kolben 32 ist zwischen Wellensicherungen 33 und 34 auf der Kolbenstange 17 befestigt. Er besteht aus elastischem Material und dichtet so an der Wand des Innenzylinders 8 ab. An den Enden des Kolbens 32 sind jeweils Dichtlippen 35a und 35b angeformt, die einen Durchgangskanal 36 verschließen. Durch Kraftbetätigung kann jedoch die Dichtigkeit an der Kolbenstange vorübergehend aufgehoben werden. Somit kann die Flüssigkeit wiederum von dem einen Raumabschnitt des Zylinderraums 16 in den anderen Raumabschnitt fließen. Bei Verminderung der Kraft wird die Dichtung der Dichtlippen 35a und 36a wieder aktiv und die Kolbenstange wird wieder fixiert.

Wählt man jedoch einen Kolben 42 gemäß Fig. 4, der vollkommen dicht auf der Kolbenstange 17 sitzt und auch an der Wand des Innenzylinders 8 dicht abschließt, so kann keine Flüssigkeitsverlagerung von einer Kolbenseite zur anderen erfolgen. In diesem Fall ist also wiederum die Bohrung 19 im Zylinder 8 erforderlich.

Bei der Ausführungsform von Fig. 4 wird neben dem Kolben auch das obere Endstück mit dem Ventil ersetzt. Das obere Endstück 39 besitzt ein Ventilgehäuse 40 mit einer Querbohrung 41, das anstelle des Ventilgehäuses 20 bzw. 20a in den Innenzylinder 8 eingesetzt wird. In dem Endstück ist außerdem ein Auslösestift 43 gelagert, der von außen eingedrückt werden kann und dabei einen Ventilstift 44 betätigt, der mit abgesetztem Querschnitt innerhalb einer elastischen Dichtung 45 verstellbar ist. Wenn der Ventilstift nach unten gedrückt wird, wird ein elastisches Formstück zusammengedrückt, ohne daß dabei Öl verdrängt wird. In diesem Verdrängungsraum kann der Ventilstift 44 eintauchen. Dieses gewährleistet eine sehr weiche Betätigung des Ventilstiftes. Wenn also der Ventilstift 44 nach unten gedrückt ist, kommt sein verjüngter Querschnitt an die Stelle der Dichtung 45 und ermöglicht den Flüssigkeitsdurchtritt durch die Querbohrung 47 und 41, womit ein Durchgang zwischen dem Zylinderraum 16 und dem Flüssigkeitsringraum 15 hergestellt wird. Wird der Ventilstift 44 wieder entlastet, so schließt sich die Dichtungsstelle 45 erneut, und das Medium kann sich über die Düsen 47 sowie 19 nicht mehr verlagern, wodurch die technische Feder in Druckrichtung starr blockiert ist. Für das elastische Formstück 46 kann beispielsweise eine Feder verwendet werden.

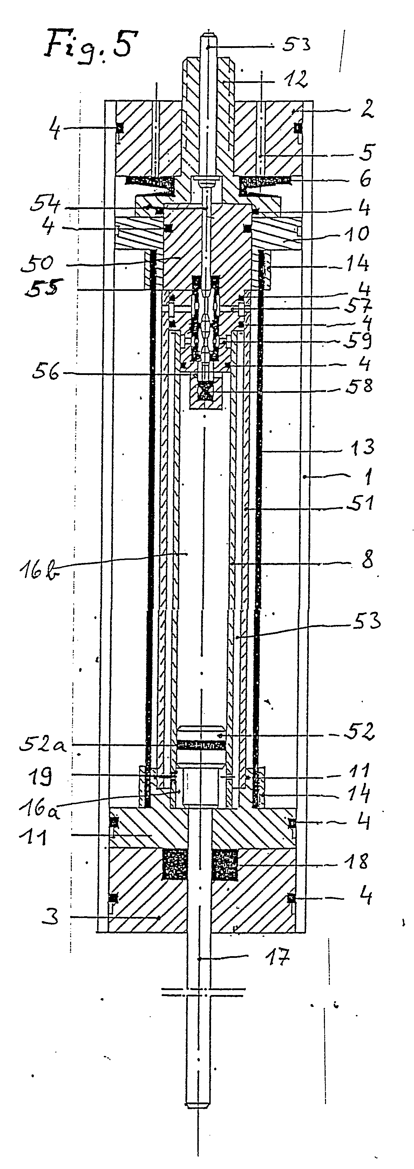

Soll eine Arretierung der Feder sowohl in Druck- als auch in Zugrichtung ermöglicht werden, so wird eine Anordnung nach Fig. 5 vorgenommen. Soweit in Fig. 5 die Teile mit Fig. 1 übereinstimmen, tragen sie die gleichen Bezugzeichen und werden nicht mehr eigens beschrieben. Zusätzlich ist in Fig. 5 ein weiterer Zylinder, nämlich ein Zwischenzylinder 51 koaxial zwischen dem Innenzylinder 8 und dem elastischen Schlauch 13 eingefügt, wodurch ein zusätzlicher Zwischenringraum 53 geschaffen wird, der über die Düse 19 mit dem Zylinderraum im Innenzylinder 8 in Verbindung steht. Auf der Kolbenstange 17 ist ein Kolben 52 angeordnet, der mit einer Dichtung 52a einen Flüssigkeitsaustausch unterbindet. Durch diesen Kolben 52 wird also der Zylinderraum 16 in einen kolbenstangenseitigen Raumabschnitt 16a und in einen kolbenseitigen Abschnitt 16b unterteilt. Der obere Flansch 10 trägt ein Ventilgehäuse 50, in welchem ein im Bodenstück 2 geführter Auslösestift 53 einen Ventilstift 54 betätigt. Dieser Ventilstift 54 besitzt verschiedene Querschnittsverengungen und wirkt mit einer Dichtung 55 zusammen, um in einer bestimmten Stellung den Durchgang durch das Ventil zu sperren. Bei Betätigung des Ventilstiftes 54 wird jedoch diese Sperrung aufgehoben und es erfolgt ein Flüssigkeitsdurchgang durch die Öffnungen 56 und 57, wodurch die Flüssigkeit aus dem Zylinderraumabschnitt 16b in den Flüssigkeitsringraum 15 strömen kann. Der Ventildrückt dabei gegen ein elastisches Formstück 58. In diesem Zustand kann die Kolbenstange 17 in jede beliebige Lage gebracht werden. Nach Loslassen des Stiftes 53 bzw. 54 kann das flüssige Medium nicht mehr durch die Bohrungen 56 und 57 strömen, damit auch nicht mehr durch die Bohrungen 19 und 59. Somit ist eine Blockierung der Kolbenstange 17 in beiden Richtungen, also in Zug- und Druckrichtung, möglich. Für das elastische Formstück 58 kann beispielsweise eine Druckfeder verwendet werden.

**Ansprüche**

1. Technische Feder mit einem einen Gasringraum (7) umschließenden, mit Bodenstücken (2, 3) abgedichteten Außenzylinder (1),
einem koaxial in dem Außenzylinder angeordneten, an den Enden abgedichteten Innenzylinder (8),
einer in dem Innenzylinder (8) verschiebbar angeordneten, durch ein Bodenstück (3) dicht nach außen geführten Kolbenstange (17) und
mindestens einem Überströmkanal (19, 21; 41, 47; 56, 57, 59) für ein den Zylinderraum (16) innerhalb des Innenzylinders (8) füllendes Fluidum,
dadurch gekennzeichnet, daß der Zylinderraum (16) im Innenzylinder (8) mit einer Flüssigkeit gefüllt ist, daß der Innenzylinder (8) koaxial von einem an den Enden dicht mit ihm verbundenen, elastischen Schlauch (13) umgeben ist, der einen veränderbaren Flüssigkeitsringraum (15) begrenzt,
daß der zwischen dem Schlauch und dem Außenzylinder verbleibende Ringraum (7) als Gasringraum mit einem Druckgas gefüllt ist und
daß der Überströmkanal bzw. die Überströmkanäle (19, 21, 41, 47, 56, 57) den Zylinderraum mit dem Flüssigkeitsringraum verbinden.

2. Technische Feder nach Anspruch 1, dadurch gekennzeichnet, daß zwischen dem Zylinderraum (16) und dem Flüssigkeitsringraum (15) ein erster, in beiden Richtungen durchgängiger Überströmkanal (19) und ein zweiter, durch ein Rückschlagventil (20) in einer Richtung durchgängiger Überströmkanal vorgesehen sind.

3. Technische Feder nach Anspruch 2, dadurch gekennzeichnet, daß der erste Überströmkanal (19) als radiale Düse in der Nähe eines Endstückes (11) in der Wand des Innenzylinders (8) und das Rückschlagventil (20) in dem entgegengesetzten Endstück (9) des Innenzylinders (8) vorgesehen sind.

4. Technische Feder nach einem der Ansprüche 1 bis 3, dadurch gekennzeichnet, daß die Kolbenstange (17) im Zylinderraum (16) durchgehend einen Spalt gegenüber der Wand des Innenzylinders (8) aufweist.

5. Technische Feder nach einem der Ansprüche 1 bis 3, dadurch gekennzeichnet, daß die Kolbenstange (17) einen an der Wand des Innenzylinders (8) dichtend anliegenden Kolben (22; 32; 42; 52) aufweist, der den Zylinderraum (16) in einen ersten, von der Kolbenstange (17) durchsetzten Raumabschnitt (16a) und in einen zweiten, vom freien Ende des Kolbens begrenzten Raumabschnitt (16b) unterteilt, wobei jeder der beiden Raumabschnitte einen Überströmkanal aufweist.

6. Technische Feder nach Anspruch 5, dadurch gekennzeichnet, daß in dem Kolben (22; 32) ein Verbindungskanal (26; 36) vorgesehen ist, der den ersten und den zweiten Raumabschnitt mit geringem Querschnitt verbindet.

7. Technische Feder nach Anspruch 6, dadurch gekennzeichnet, daß der Verbindungskanal (36) jeweils mit Dichtlippen (35a, 35b) verschlossen ist, welche den Durchgang erst bei einem vorgegebenen Druck freigeben.

8. Technische Feder nach Anspruch 5, dadurch gekennzeichnet, daß der Kolben (42) die beiden Raumabschnitte (16a, 16b) des Zylinderraums (16) ohne Durchlaß gegeneinander abschließt und
daß der zweite Raumabschnitt (16b) als Überströmkanal ein von außen wahlweise verschließbares Ventil (40, 44, 45; 50, 54, 55) aufweist.

9. Technische Feder nach Anspruch 8, dadurch gekennzeichnet, daß das Ventil ein hohlzylinderartiges Ventilgehäuse (40) aufweist, welches in einem der Kolbenstange gegenüberliegenden Endstück (39) des Innenzylinders (8) angeordnet ist und axial versetzte Öffnungen (41, 47) zum Zylinderraum (16) einerseits und zum Flüssigkeitsringraum (15) andererseits aufweist,
daß in dem Ventilgehäuse (40) ein in Axialrichtung verstellbarer Ventilstift (44) mit abgestuftem Querschnitt geführt ist, welcher je nach Stellung den Durchgang zwischen den Öffnungen (41, 47) sperrt oder freigibt.

10. Technische Feder nach Anspruch 9, dadurch gekennzeichnet, daß der Ventilstift (44) durch ein elastisches Formstück (46) in der Sperrposition gehalten wird und durch Axialdruck gegen die Rückstellfeder in die Freigabeposiltion verstellbar ist.

11. Technische Feder nach Anspruch 1, dadurch gekennzeichnet,
daß die Kolbenstange (17) einen an der Wand des Innenzylinders (8) dichtend anliegenden, den Zylinderraum in zwei gegeneinander abgeschlossene Raumabschnitte (16a, 16b) unterteilenden Kolben (52) aufweist,
daß zwischen dem Innenzylinder (8) und dem Schlauch (13) koaxial ein an den Enden dicht mit beiden verbundener Zwischenzylinder (51) vorgesehen ist, der mit dem Innenzylinder einen Zwischenringraum (53) bildet,
daß der kolbenstangenseitige Raumabschnitt (16a) über eine Düse (19) mit dem Zwischenringraum (53) verbunden ist und
daß in einem der Kolbenstange (17) gegenüberliegen den Endstück (10) des Innenzylinders (8) ein Überströmkanal in Form eines wahlweise verschließbaren Ventils (50, 54, 55, 56, 57) den kolbenseitigen Raumabschnitt (16b) des Zylinderraums mit dem durch den Schlauch (13) und den Zwischenzylinder (51) begrenzten Flüssigkeitsringraum (15) verbindet.

12. Technische Feder nach Anspruch 10, dadurch gekennzeichnet, daß das elastische Formstück (46) eine Rückstellfeder ist.

Fig.4  43

Fig.1  12

5
4
2
6

39
12a  10a
44  4  10

40  20  25  Fig.2
9  23
14  26  22
21  7  24
41  20a  17
45

47  46

16  1

42  15  Fig.3
35a  33
8  32
13'  36
35b  34

13

17

17
19

14
4
11
18
3
4

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | FR-A- 953 409 (GOUILLOUX) * Insgesamt * | 1 | A 47 C 3/30 F 16 F 9/08 |
| A | | 5,8 | |
| Y | US-A-3 151 706 (DILLENBURGER et al.) * Insgesamt * | 1 | |
| A | --- | 6,7 | |
| A | DE-A-2 253 269 (SUSPA-TEDERUNGSTECHNIK) * Figur 1; Seite 6, Zeile 12 - Seite 7, Zeile 11 * ----- | 9 | |

RECHERCHIERTE SACHGEBIETE (Int. Cl.5)

A 47 C
F 16 F
A 47 B

Der vorliegende Recherchenbericht wurde für alle Patentansprüche erstellt

| Recherchenort | Abschlußdatum der Recherche | Prüfer |
|---|---|---|
| DEN HAAG | 12-09-1989 | MYSLIWETZ W.P. |